# EUROPEAN PATENT APPLICATION

(11) **EP 4 614 248 A1**
(43) Date of publication of application: **10.09.2025**
(21) Application number: 22964195.6
(22) Date of filing: 23.11.2022
(51) Int. Cl.: G05B 19/418

(54) **TEST PROCESS ANALYSIS METHOD AND APPARATUS, ELECTRONIC DEVICE, AND STORAGE MEDIUM**

(30) Priority: 04.11.2022 CN 202211376386
(71) Applicant: Megarobo Technologies Co., Ltd., Beijing 102200 (CN)
(72) Inventor: ZHANG, Caifeng, Beijing 102200 (CN); LI, Gang, Beijing 102200 (CN)
(74) Representative: Hofmann, Matthias
(86) International application number: PCT/CN2022/133700
(87) International publication number: WO 2024/092898

(57) **Abstract**

Embodiments of the present invention provide a test process analysis method, a test process analysis apparatus, an electronic device, and a storage medium. The method comprises: determining an analysis sequence of nodes in a test process on the basis of a connection relationship between the nodes in the test process; acquiring service information of the nodes in the test process, wherein the service information of the nodes comprises preset node information and node information set when the test process is built; and configuring the service information of the nodes to the corresponding nodes according to the determined analysis sequence so as to analyze the test process into a plurality of ordered operations. According to the technical solution, a test process can be automatically analyzed. Therefore, after a user builds the test process, a manual analysis operation of the user is not needed, that is, the test process can be automatically executed on the basis of an analysis result obtained after the test process is automatically analyzed. The workload of the user is greatly reduced, and powerful guarantee is provided for a smooth and accurate test process.

## Description

The present disclosure claims the priority to Chinese patent application No. 202211376386.7, titled "TEST PROCESS ANALYSIS METHOD AND APPARATUS, ELECTRONIC DEVICE, AND STORAGE MEDIUM", filed on November 4, 2022 with the China National Intellectual Property Administration, which is incorporated herein by reference in its entirety.

### FIELD

The present disclosure relates to the technical field of automatic control, and in particular to a test process analysis method, a test process analysis apparatus, an electronic device, and a storage medium.

### BACKGROUND

At present, automation transformation is constantly being carried out in various technical fields to liberate manpower and improve efficiency. Automation systems are extensively used in automated manufacturing, automated inspection, automated testing, and other fields. Users may build the entire automation process using the interface provided by the automation system.

The built automation test process may be analyzed before execution so as to disassemble the entire automation test process into multiple minimum execution operations and assign tasks for each device to execute these minimum execution operations respectively. By allowing each device to complete its respective task, every minimum execution operation is ensured to be carried out smoothly, thereby completing the entire automation process.

In the prior art, the above analysis process often requires user involvement, that is, users manually analyze the automation test process. This significantly increases the workload of the user, and it is difficult to ensure the accuracy of manually analyzed results, which may lead to the built automation process failing to execute normally.

### SUMMARY

In view of the above problem, the present disclosure is provided. According to an aspect of the present disclosure, a test process analysis method is provided. The method comprises: determining an analysis order of nodes in a test process based on a connection relationship between the nodes in the test process; acquiring service information of the nodes in the test process, wherein the service information of the nodes comprises preset node information and node information set when building the test process; and configuring the service information of the nodes to the corresponding nodes in accordance with the determined analysis order, to analyze the test process into a plurality of ordered operations.

In an embodiment, the configuring the service information of the nodes to the corresponding nodes in accordance with the determined analysis order to analyze the test process into the plurality of ordered operations comprises: determining a dependency relationship between a current node and its preceding adjacent node in accordance with the determined analysis order; and configuring the current node using service information of the preceding adjacent node and service information of the current node in accordance with the dependency relationship, to determine one or more ordered operations corresponding to the current node.

In an embodiment, the acquiring service information of the nodes in the test process comprises: acquiring, for adjacently connected device nodes in the test process, pre-operation and/or post-operation information of device nodes; and wherein the configuring the service information of the nodes to the corresponding nodes in accordance with the determined analysis order to analyze the test process into the plurality of ordered operations comprises: determining an execution order of pre-operations and/or post-operations of the device nodes and self-operations of the device nodes based on an adjacent connection relationship between different device nodes in the test process and the pre-operation and/or post-operation information of the device nodes.

In an embodiment, the determining the execution order of pre-operations and/or post-operations of the device nodes and self-operations of the device nodes based on the adjacent connection relationship between different device nodes in the test process and the pre-operation and/or post-operation information of the device nodes comprises: merging, when there is at least one repeated operation in post-operations of a previous device node and pre-operations of a subsequent device node among the adjacently connected device nodes, the at least one repeated operations in the post-operations of the previous device node and the pre-operations of the subsequent device node, such that each merged operation appears as a single operation in the execution order.

In an embodiment, the merging the at least one repeated operations in the post-operations of the previous device node and the pre-operations of the subsequent device node comprises: determining, when the post-operations of the previous device node comprise a first transporting operation of transporting from the previous device to the subsequent device and the pre-operations of the subsequent device node comprise a second transporting operation of transporting from the previous device to the subsequent device, that the first transporting operation and the second transporting operation are repeated, and merging the first transporting operation and the second transporting operation into the same operation.

In an embodiment, the method further comprises: providing a user interface which is configured to display an information template of the device, wherein the information template is provided with an operable control which is configured to acquire the service information of the device nodes in the test process.

In an embodiment, the nodes comprise process control nodes, and the determining the analysis order of nodes in the test process based on the connection relationship between the nodes in the test process comprises: determining, starting from the starting node of the test process, a next node sequentially based on the connection relationship between nodes in the test process, until all nodes in the test process are traversed; and wherein for each of the process control nodes, nodes between a starting position and an ending position of the process control node are determined as one analysis unit for analyzing.

In an embodiment, the nodes comprise a device node and a consumable node; service information of the device node comprises one or more of: device attribute information, operation instruction information, execution duration information, and pre-operation and/or post-operation information of a device corresponding to the device node; and service information of the consumable node comprises one or more of: consumable information of a consumable corresponding to the consumable node, ending position information at the end of the test process, and error position information at the event of an error in the test process.

According to another aspect of the present disclosure, a test process analysis apparatus is also provided. The apparatus comprises:
a node analysis module, configured to determine an analysis order of nodes in a test process based on a connection relationship between the nodes in the test process;
an acquisition module, configured to acquire service information of the nodes in the test process, wherein the service information of the nodes comprises preset node information and node information set when building the test process; and
an operation analysis module, configured to configure the service information of the nodes to the corresponding nodes in accordance with the determined analysis order, to analyze the test process into a plurality of ordered operations.

According to another aspect of the present disclosure, an electronic device is also provided. The electronic device comprises a processor and a memory. The memory stores computer program instructions which, when executed by the processor, cause the processor to perform the test process analysis method as described above.

According to a further aspect of the present disclosure, a storage medium having program instructions stored therein is also provided. The program instructions, when executed, cause the processor to perform the test process analysis method as described above.

According to the technical solution, automatic analysis of the test process can be realized. Therefore, after a user builds the test process, the test process can be automatically executed based on an analysis result obtained after the test process is automatically analyzed, without the manual analysis operations by the user. The workload of the user is greatly reduced, and powerful guarantee is provided for a smooth and accurate test process.

Hereinabove provide are merely brief description of technical solutions of the present disclosure. Hereinafter detailed embodiments of the present disclosure are provided, such that technical means of the present disclosure are clarified and enabled according to content of the embodiments, and objectives, features, and advantages of embodiments of the present disclosure would become more intelligible.

### BRIEF DESCRIPTION OF THE DRAWINGS

Above and other objects, features, and advantages of the present disclosure will become more apparent with reference to the detailed description of the embodiments of the present disclosure made in conjunction with the drawings. The drawings are intended to provide further understanding of the embodiments of the present disclosure, and constitute a part of the specification. The drawings are intended to describe the present disclosure in conjunction with the embodiments of the present disclosure, and do not limit the present disclosure. In the drawings, same reference numerals generally represent same parts or steps.
FIG. 1 illustrates a schematic flowchart of a test process analysis method according to an embodiment of the present disclosure;
FIG. 2 illustrates a schematic diagram of a built test process according to an embodiment of the present disclosure;
FIG. 3 illustrates a schematic diagram of an execution order of operations in an analysis result according to an embodiment of the present disclosure;
FIG. 4 illustrates a schematic flowchart of configuring service information of nodes to the corresponding nodes according to the determined analysis order to analyze the test process into multiple ordered operations according to an embodiment of the present disclosure.
FIG. 5 illustrates a schematic block diagram of a test process analysis apparatus according to an embodiment of the present disclosure; and
FIG. 6 illustrates a schematic block diagram of an electronic device according to an embodiment of the present disclosure.

### DETAILED DESCRIPTION

Exemplary embodiments of the present disclosure are described in detail with reference to the drawings to make purposes, solutions, and advantages of the present disclosure more apparent. Apparently, the described embodiments are only part of the embodiments instead of all embodiments of the present disclosure. It should be understood that, the present disclosure is not limited by the exemplary embodiments described herein. Based on the embodiments of the present disclosure described herein, all other embodiments obtained by those skilled in the art without creative efforts should fall within the scope of protection of the present disclosure.

As described above, with the development of automation technology, automation systems have been applied in various fields to realize automation transformation. Users can build an entire automation process using the interface provided by the automation system. The built automation process may be analyzed before execution. For example, the built test process comprises: a sample plate is transferred to an incubator after being pipetted from a pipetting workstation. Accordingly, it is analyzed as follows: first, the robotic arm of the automation system transfers the sample plate to an entrance plate position of the pipetting workstation; then, a transfer module in the pipetting workstation transfers the sample plate from the entrance plate position to a pipetting operation area, and the pipetting workstation performs a pipetting operation; next, the transfer module in the pipetting workstation transfers the sample plate from the pipetting operation area to an exit plate position; and finally, the robotic arm of the automation system transfers the sample plate from the exit plate position of the pipetting workstation to an entrance of the incubator. If the above analysis process is all carried out by the user through manual operation of, it can not only increase the workload of the user, making the process analyzing time-consuming, but also make it difficult to ensure the accuracy of the analysis result.

In order to address the above technical problem, a test process analysis method is provided in the present disclosure. With this analysis method, the test process can be automatically and quickly analyzed before execution.

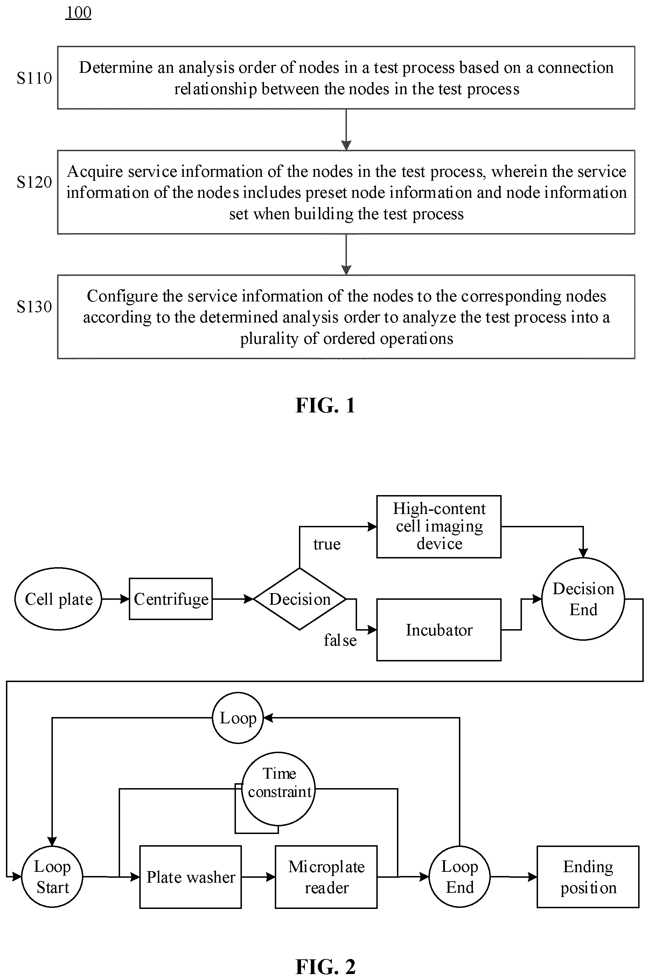

FIG. 1 illustrates a schematic flowchart of a test process analysis method 100 according to an embodiment of the present disclosure. As shown in FIG. 1, the analysis method 100 may comprise the following steps.

In step S110, an analysis order of nodes in a test process is determined based on a connection relationship between the nodes in the test process.

It can be understood that for nodes in the test process other than the starting node and the ending node, these nodes may each have at least one input node and at least one output node. In other words, each of these nodes is connected to at least two other nodes. These input nodes and output nodes may also serve as current nodes respectively, and have their own input nodes and output nodes. The input or output relationship, i.e., the connection relationship between the nodes, may be determined by the direction of the lines connecting each node. According to the connection relationship between the nodes, each node may be sorted sequentially. For example, for a node in the test process, its order is after its input node and before its output node. Priority is given to analyzing the nodes that are positioned earlier in the order of node sorting. Nodes that are positioned later in the order of node sorting are analyzed later. Thus, the analysis order of nodes in the test process can be determined.

In step S120, service information of the nodes in the test process is acquired. The service information of the nodes comprises preset node information and node information set when the test process is built.

In an embodiment, a host computer may receive service information of the nodes from the user. For example, the host computer may provide a visual interface to the user. Based on the visual interface, the user may input the service information of the nodes through an input device (such as a mouse, keyboard, etc.) of the host computer. Alternatively, the service information of the nodes may be stored in a storage device of the host computer in advance. The service information of the nodes may comprise preset node information and node information set when building the test process. The service information of the nodes comprises attribute information, operation information related to operations, and the like. The attribute information may be the name, function of a node, and identifier information of a device node, and the like; the operation information comprises operation instructions correspondingly to be executed by the node, execution time, information related to pre-operations and/or post-operations of the device node, and the like; the service information of the node may comprise the name, function, operation instructions correspondingly to be executed, and execution time of the nodes, and the like. In a specific embodiment, when building a test process, the user may input node information set when building the test process through an input device. The node information set when building the test process specifically comprises, for example, identifier information, pre-operation and/or post-operation information of the device node, loop count information and loop exit condition information of a loop node, etc. The pre-operation of the device node is executed by an execution device for the pre-operations before a device corresponding to the device node is controlled to perform its self-operations, and the post-operation of the device node is executed by an execution device for the post-operation after the device corresponding to the device node is controlled to perform its self-operation. The execution device for the pre-operation and/or for the post-operation may be the same as or different from the device corresponding to the device node. For the nodes corresponding to the preset node information, if such nodes are involved in the built test process, the host computer can retrieve the preset node information from the storage device. The preset node information comprises, for example, service information of the device nodes in the test process, such as parameter information comprising the function, location, etc., of the device corresponding to the device node. It can be understood that the preset node information may be set in advance by the user through an input device and a visual interface before a test process is built, or may be set by a device or apparatus corresponding to the node at the time of leaving the factory. Here, "preset" may refer to a building process prior to the test process.

In step S130, the service information of the nodes is configured to the corresponding nodes according to the determined analysis order, to analyze the test process into a plurality of ordered operations.

In an embodiment, after the analysis order of the nodes is determined in step S110, the service information of the nodes acquired in step S120 may be populated into each corresponding node, and thus a sequence of nodes having a certain analysis order and containing service information therein may be obtained. By analyzing the nodes sequentially according to the order of the nodes in the sequence, step information corresponding to each node may be obtained, such as what kind of operation to be performed by the device corresponding to the node, the execution time of such operation and the like. Thereafter, according to the order of the nodes in the sequence, the step information corresponding to all of the analyzed nodes in the test process is connected to obtain multiple operations arranged in order. Based on the multiple operations arranged in order, the test process may be executed in order.

According to the above technical solution, automatic analysis of the test process can be realized. Therefore, after a user builds the test process, the test process can be automatically executed based on an analysis result obtained after the test process is automatically analyzed without manual analysis operations by the user. The workload of the user is greatly reduced, and powerful guarantee is provided for a smooth and accurate test process.

In an embodiment, the nodes may comprise a device node and a consumable node. The service information of the device node comprises one or more of: device attribute information, operation instruction information, execution duration information, and pre-operation and/or post-operation information of a device corresponding to the device node. The device corresponding to the device node may comprise a pipetting workstation, a centrifuge, an incubator, a microplate reader, and the like. The device attribute information of the device may refer to information such as the name, function, model, and location of the device.

The service information of the consumable node comprises one or more of: consumable information of the consumable corresponding to the consumable node, ending position information at the end of the test process, and error position information at the event of an error in the test process. Here, the consumable information of the consumable may comprise the name, type, and the like of the consumable. For example, when the test process is a chemical test process, the consumables corresponding to the consumable node may comprise test tubes, glass sheets, well plates for placing test tubes in batches, and the like. The ending position information at the end of the test process may indicate a final position of the consumables after the entire test process is completed. The error position information at the event of an error in the test process may indicate a preset error position where the consumables are transferred to when an error occurs during the execution of the test process.

Thus, users can customize the service information of the aforementioned multiple nodes. It greatly meets the needs of different users. Moreover, the service information of the nodes is subdivided into the above multiple types, which provides a powerful guarantee for automatic analysis, thereby ensuring the execution accuracy of the test process.

In an embodiment, the method 100 may also comprise: providing a user interface which is configured to display an information template of the device. The information template is provided with an operable control which is configured to acquire service information of the device nodes in the test process.

It can be understood that in order to facilitate user operation, the user interface may be provided to the user for human-computer interaction. The user interface is configured to display the information template of the device. The information template may comprise information such as system default parameters of each device and operations that are allowed to be performed. The information template is provided with an operable control. The service information of the device nodes in the test process may be acquired by the operable control in response to a user operation. The operable control may be a text input box, a filter box, or the like.

The information template on the user interface described above provides a framework for the user to set the service information of the device nodes. Users can directly input the service information of device nodes in the test process under their guidance and assistance, which is not only convenient for users to operate, but also effectively avoids users from missing the service information of device nodes, and improves the user experience.

In an embodiment, the nodes may comprise process control nodes. In this embodiment, step S110 of determining an analysis order of nodes in a test process based on a connection relationship between the nodes in the test process, may comprise: determining, starting from the starting node of the test process, a next node sequentially based on the connection relationship between nodes in the test process, until all nodes in the test process are traversed. For each of the process control nodes, nodes between a starting position and an ending position of the process control node are determined as one analysis unit for analyzing.

FIG. 2 illustrates a schematic diagram of a built test process according to an embodiment of the present disclosure. As shown in FIG. 2, a starting node of the test process is a consumable node, which is shown as the "cell plate" in FIG. 2. Starting from the "cell plate" node, the next node may be determined sequentially according to the direction of the lines connecting each node. In the embodiment shown in FIG. 2, the next node of the "cell plate" node is a centrifuge node. The next node of the centrifuge node is a process control node. In this embodiment, the process control node may comprise a decision node and a loop node. Thus, the next node of the centrifuge node may be a starting position node "Decision" of the decision node. An ending position node "Decision End" of the decision node may be searched starting from the starting position node "Decision" of the decision node. When analyzing the decision node, all nodes between "Decision" and "Decision End" are determined as one analysis unit for analyzing. The node following the decision node is a loop node. For the loop node in the test process, its starting position is "LoopStart" shown in FIG. 2, and its ending position is "LoopEnd" shown in FIG. 2. When analyzing the loop node, all nodes between "LoopStart" and "LoopEnd" are determined as one analysis unit for analyzing. The next node of the loop node is an ending position node of the test process. It can be appreciated that the ending position node may not perform any operations and is used to place consumables at the end of the test process.

In the above technical solution, all nodes in the test process are traversed, and in turn the analysis order of the nodes in the test process can be determined. Therefore, it can be ensured that all nodes in the test process are comprised in the analysis order, and the accuracy of the analysis order of the nodes is ensured. In addition, determining the process control nodes as one analysis unit for analyzing can ensure the logical accuracy of the test process analyzing process, i.e., it ensures the accuracy of the analysis result.

In an embodiment, step S120 of acquiring the service information of the nodes in the test process, may comprise: step S121, in which for adjacently connected device nodes in the test process, pre-operation and/or post-operation information of the device nodes are acquired. In this embodiment, service information of the device nodes may comprise pre-operation and/or post-operation information of the device nodes. The pre-operation information may comprise a name of the execution device for performing the pre-operations and pre-operation instructions. The post-operation information may comprise a name of the execution device for performing the post-operations and post-operation instructions. Specifically, for example, the device corresponding to the device nodes is a pipetting workstation, which may have pre-operation and/or post-operation information. Specifically, before the pipetting workstation performs its own pipetting operation, the sample plate is placed in a pipetting operation area, i.e. a working area, within the pipetting workstation. Thus, a pre-operation of plate in may be set. Plate in may refer to the operation of moving the sample plate from an entrance plate position to the pipetting operation area by a transfer module in the pipetting workstation. Thereafter, the pipetting workstation performs a pipetting operation. After the pipetting operation is completed, a post-operation of plate out may be set for the pipetting workstation in a similar manner. Plate out may refer to the operation of moving the sample plate from the pipetting operation area to an exit plate position of the pipetting workstation by the transfer module in the pipetting workstation.

Step S130 of configuring the service information of the nodes to the corresponding nodes in accordance with the determined analysis order, may comprise: step S131, in which an execution order of pre-operations and/or post-operations of the device nodes and self-operations of the device nodes is determined based on the adjacent connection relationship between different device nodes in the test process and the pre-operation and/or the post-operation information of the device nodes.

As described above, after the analysis order of the nodes is determined in step S110, the service information of the nodes acquired in step S120 may be configured to each corresponding node to obtain a sequence of nodes. Furthermore, based on the sequence of nodes, the nodes may be analyzed sequentially. For one of the nodes, an execution order of all operations contained within the node can be obtained by analyzing. For example, for device node A, it is provided with pre-operations and post-operations. After analyzing device node A, an execution order of the operations may be obtained as follows: pre-operation of device node A → self-operation of device node A → post-operation of device node A. After all the device nodes and other nodes in the test process are analyzed, the test process may be analyzed into a plurality of ordered operations according to the determined analysis order, with each operation having its respective execution device.

Thus, when a node is a device node and is provided with a pre-operation and/or a post-operation, all operations contained in the node may be analyzed and each operation may be sorted. This ensures the accuracy of the analysis result, and then facilitates the smooth execution of the test process.

In an embodiment, step S131 of determining an execution order of pre-operations and/or post-operations of the device nodes and self-operations of the device nodes based on the adjacent connection relationship between different device nodes in the test process and the pre-operation and/or post-operation information of the device nodes, may comprise: step S131a in which, when there is at least one repeated operation in the post-operations of the previous device node and the pre-operations of the subsequent device node among the adjacently connected device nodes, the at least one repeated operation in the post-operations of the previous device node and the pre-operations of the subsequent device node are merged correspondingly, such that each of the merged operations appears as a single operation in the execution order. The repeated operations may refer to operations with the same execution device, operation instructions, and execution time.

In an embodiment, device node A and device node B are two device nodes connected adjacently. The device node A is referred to as the previous device node, and the device node B is referred to as the subsequent device node. It is assumed that there are 4 post-operations for device node A, namely a, b, c, and d. It is assumed that there are 3 pre-operations for device node B, namely c, d, and e. The post-operation c of device node A and the pre-operation c of device node B, as well as the post-operation d of device node A and the pre-operation d of device node B can be considered as repeated operations, respectively. Thus, the post-operation c of device node A may be merged with the pre-operation c of device node B, and the post-operation d of device node A may be merged with the pre-operation d of device node B. Further, in this embodiment, the determined execution order of the pre-operations and/or post-operations for device node A and device node B may be as follows: post-operation a of device node A → post-operation b of device node A → post-operation c of device node A (pre-operation c of device node B) → post-operation d of device node A (pre-operation d of device node B) → pre-operation e of device node B.

Therefore, for a case where there are repeated operations in the post-operations of the previous device node and the pre-operations of the subsequent device node, the repeated operations may be merged into one operation. It effectively reduces the number of operations in the analysis result and simplifies the analysis result, avoiding the issue of conflicts in the analysis result due to the repeated operations, thereby ensuring the accuracy of the analysis result.

In a specific embodiment, step S131a of merging the repeated operations in the post-operations of the previous device node and the pre-operations of the subsequent device node correspondingly, may comprise:
when the post-operations of the previous device node comprises a first transporting operation of transporting from the previous device to the subsequent device and the pre-operations of the subsequent device node comprises a second transporting operation of transporting from the previous device to the subsequent device, determining that the first transporting operation and the second transporting operation are repeated, and merging the first transporting operation and the second transporting operation into the same operation.

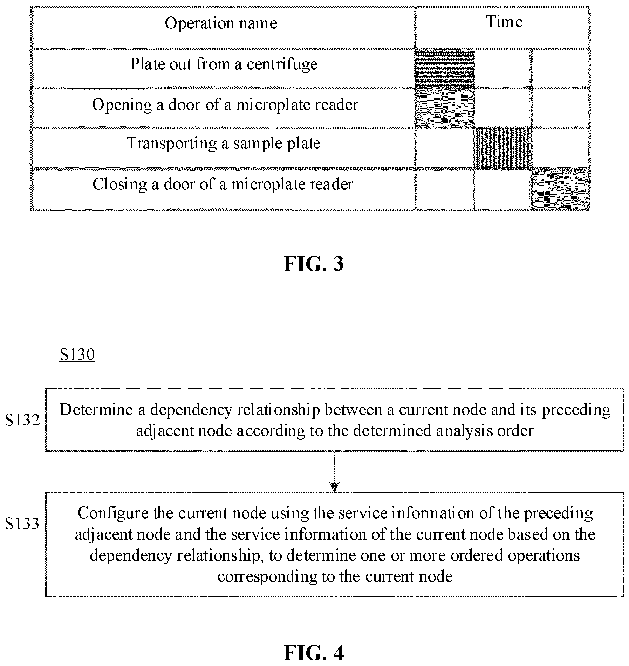

FIG. 3 illustrates a schematic diagram of an execution order of operations in an analysis result according to an embodiment of the present disclosure. Here, the horizontal right direction of the table indicates the passage of time. Fig. 3 is only used to illustrate the order of each operation in the analysis result, and the horizontal length of each square in the table does not indicate the actual execution time of the operation. In this embodiment, device node A and device node B are two adjacently connected device nodes. The device corresponding to device node A is the previous device, i.e., a centrifuge, and the device corresponding to device node B is the subsequent device, i.e., a microplate reader. The post-operations of the centrifuge comprise plate out and transporting the sample plate. The pre-operations of the microplate reader comprise opening the door, transporting the sample plate, and closing the door. As described above, when there are repeated operations in the post-operations of the previous device and the pre-operations of the subsequent device, the repeated operations may be merged correspondingly. In this embodiment, transporting the sample plate in both the post-operations of the centrifuge and the pre-operations of the microplate reader may represent a transporting operation of transporting the sample plate from the exit plate position of the centrifuge to the entrance plate position of the microplate reader. It can be appreciated that in an automation system, the operation of transporting the sample plate is performed by a robotic arm in the automation system. There are one or more robotic arms in an automation system. When the operation of transporting the sample plate in the centrifuge and the operation of transporting the sample plate in the microplate reader are both implemented by the same robotic arm, these two transporting operations may be regarded as repeated operations. Further, the operation of transporting the sample plate in the centrifuge and the operation of transporting the sample plate in the microplate reader are merged into the same transporting operation. In addition, it can be determined whether the pre-operations and post-operations of different devices in the test process can be performed simultaneously; and the pre-operations and post-operations that can be performed simultaneously are programmed to be performed concurrently. It can be appreciated that the plate out operation of the centrifuge is performed by a transfer module in the centrifuge. The door opening operation of the microplate reader is performed by the robotic arm of the automation system. The execution device of the two operations is not the same and the execution of the test process may not be affected when the two operations are performed at the same time. Therefore, during analyzing, the plate out operation of the centrifuge and the door opening operation of the microplate reader may be determined as operations that can be performed simultaneously. In FIG. 3, the operations that can be performed simultaneously, namely the plate out operation of the centrifuge and the door opening operation of the microplate reader, have the same execution time. Thus, in the embodiment shown in FIG. 3, the execution order of the operations may be as follows: plate out from the centrifuge while opening the door of the microplate reader → transporting the sample plate → closing the door of the microplate reader.

Therefore, when there are repeated transporting operations in the post-operations of the previous device node and the pre-operations of the subsequent device node, the repeated transporting operations may be merged into one transporting operation. This can simplify the analysis result while ensuring the accuracy of the analysis result.

FIG. 4 illustrates a schematic flowchart of step S130 of configuring the service information of the nodes to the corresponding nodes according to the determined analysis order to analyze the test process into a plurality of ordered operations according to an embodiment of the present disclosure. As shown in FIG. 4, step S130 may comprise step S132 to step S133.

In step S132, according to the determined analysis order, a dependency relationship between a current node and its preceding adjacent node is determined.

As described above, sorting information of each of the nodes in the test process may be comprised in the analysis order. The sorting information is determined based on the connection relationship between the nodes with each other. For a certain node in the test process other than the starting node and the ending node, for example, node Y, it may have at least one input node X and at least one output node Z. It may be determined that the node Y (the current node) is dependent on its input node X. For the output node Z, when it is regarded as the current node, the node Y becomes the input node for the node Z. It may be determined that the node Z (the current node) is dependent on its input node Y. It can be understood that in this embodiment, the dependency relationship between the nodes is direct. Here, "direct" may mean that for the node Z, although the node X also precedes the node Z in the analysis order, the node X and the node Z are not adjacent, with the node Y therebetween, and thus this dependency relationship is indirect.

In step S133, according to the dependency relationship, the current node is configured using the service information of the preceding adjacent node and the service information of the current node, to determine one or more ordered operations corresponding to the current node.

After the dependency relationship between the nodes is determined in step S132, the service information of the current node and its preceding adjacent node (the node that the current node depends on) acquired in step S120 may be populated into the current node without populating the service information of other nodes into the current node. Accordingly, the current node may be analyzed based on the service information of the current node and the service information of its preceding adjacent node, and then one or more ordered operations corresponding to the current node can be determined.

Therefore, by analyzing the nodes using the direct dependency relationship between the nodes, the amount of data in the analysis process is effectively reduced, the interference from nodes other than the preceding adjacent node on the analysis results of the current node is avoided, and the accuracy of the analysis results is ensured.

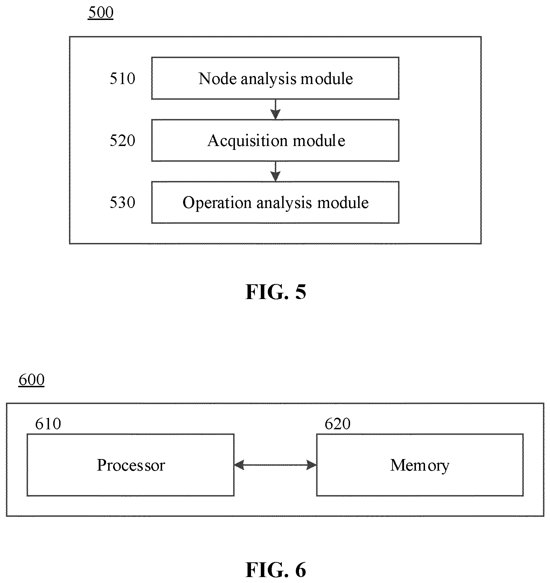

According to another aspect of the present disclosure, a test process analysis apparatus is also provided. FIG. 5 illustrates a schematic block diagram of a test process analysis apparatus 500 according to an embodiment of the present disclosure. As shown in FIG. 5, the apparatus 500 comprises a node analysis module 510, an acquisition module 520, and an operation analysis module 530.

The node analysis module 510 is configured to determine an analysis order of nodes in the test process based on a connection relationship between the nodes in the test process.

The acquisition module 520 is configured to acquire the service information of the nodes in the test process. The service information of the nodes may comprise preset node information and node information set when building a test process.

The operation analysis module 530 is configured to configure the service information of the nodes to the corresponding nodes according to the determined analysis order, to analyze the test process into a plurality of ordered operations.

In an embodiment, the test process analysis apparatus may also comprise a display module. The display module is configured to provide a user interface. The user interface is configured to display an information template of the device. The information template is provided with an operable control. The operable control is configured to acquire the service information of the device nodes in the test process.

In an embodiment, the node analysis module 510 may comprise a traversal node analysis module. The traversal node analysis module is configured to determine, starting from the starting node of the test process, a next node sequentially based on the connection relationship between nodes in the test process, until all nodes in the test process are traversed. For each of the process control nodes, nodes between the starting position and the ending position of the process control node are determined as one analysis unit for analyzing.

In an embodiment, the acquisition module 520 may comprises a pre-operation and/or post-operation information acquisition module. The pre-operation and/or post-operation information acquisition module is configured to acquire, for adjacently connected device nodes in the test process, the pre-operation and/or post-operation information of the device nodes.

The operation analysis module 530 may comprise a pre-operation and/or post-operation execution order determination module, which is configured to determine an execution order of pre-operations and/or post-operations of the device nodes and self-operations of the device nodes based on the adjacent connection relationship between different device nodes in the test process and the pre-operation and/or post-operation information of the device nodes.

In an embodiment, the pre-operation and/or post-operation execution order determination module may comprise a repeated operation merging module. The repeated operation merging module is configured to merge, when there is at least one repeated operation in the post-operations of the previous device node and the pre-operations of the subsequent device node among the adjacently connected device nodes, the at least one repeated operation in the post-operations of the previous device node and the pre-operations of the subsequent device node correspondingly, such that each merged operation appears as a single operation in the execution order.

In a specific embodiment, the repeated operation module is specifically configured to determine, when the post-operations of the previous device node comprises a first transporting operation of transporting from the previous device to the subsequent device and the pre-operations of the subsequent device node comprises a second transporting operation of transporting from the previous device to the subsequent device, that the first transporting operation and the second transporting operation are repeated, and merge the first transporting operation and the second transporting operation into the same operation.

In an embodiment, the operation analysis module 530 may comprise a dependency relationship determination module and a current node operation analysis module. The dependency relationship determination module is configured to determine a dependency relationship between a current node and its preceding adjacent node according to the determined analysis order. The current node operation analysis module is configured to configure the current node using the service information of the preceding adjacent node and the service information of the current node according to the dependency relationship to determine one or more ordered operations corresponding to the current node.

According to yet another aspect of the present disclosure, an electronic device is also provided. FIG. 6 illustrates a schematic block diagram of an electronic device 600 according to an embodiment of the present disclosure. As shown in FIG. 6, the electronic device 600 may comprise a processor 610 and a memory 620. The memory 620 stores computer program instructions that, when executed by the processor 610, cause the test process analysis method as described above to be performed.

According to still another aspect of the present disclosure, a storage medium is also provided. The program instructions are stored on the storage medium, and when executed, cause the test process analysis method as described above to be performed. The storage medium may comprise, for example, a storage component of a tablet computer, a hard disk of a personal computer, a read-only memory (ROM), an erasable programmable read-only memory (EPROM), a portable compact disk read-only memory (CD-ROM), a USB memory, or any suitable combination of the above. The computer-readable storage medium may be any combination of one or more computer-readable storage media.

Specific implementation solutions of the above test process analysis apparatus, the electronic device and the storage medium may be understood by those skilled in the art by reading the above description of the test process analysis method, which is not described in detail herein for brevity.

Although the embodiments have been described herein with reference to the drawings, it should be understood that the above embodiments are merely exemplary and are not intended to limit the scope of the present disclosure. Many changes and modifications may be made by those skilled in the art without departing from the scope and spirit of the present disclosure. All such changes and modifications are deemed to fall within the scope of the claims of the present disclosure.

Those skilled in the art may realize that the units and algorithm steps of each example described in conjunction with the embodiments herein may be implemented by electronic hardware, or a combination of computer software and electronic hardware. Whether these functions are performed in hardware or software depends on the specific application and design constraints of the technical solution. Those skilled in the art may implement the described functionality in various manners for each specific application, while such implementations should not be considered to be beyond the scope of the present disclosure.

In the embodiments according to the present disclosure, it should be understood that the disclosed apparatus and method may be implemented in other forms. For example, the device embodiments described hereinabove are only schematic. For example, the division of the units is only based on logical functions, and there may be other division ways in actual implementation, such as multiple units or components can be combined or integrated into another device, or some features can be neglected or not executed.

In the specification provided herein, a lot of specific details are described. However, it may be appreciated that the embodiments of the present disclosure may be practiced without these specific details. In some instances, well-known methods, structures and technologies are not described in detail so as not to obscure the understanding of this specification.

Similarly, it should be understood that in order to simplify the present disclosure and help to understand one or more of the various aspects of the application, in the description of the exemplary embodiments of the present disclosure, the various features of the present disclosure are sometimes grouped together into a single embodiment, figure, or description thereof. However, the method according to the present disclosure should not be interpreted as reflecting the following intention: the claimed application requires more features than those explicitly stated in each claim. More specifically, as reflected in the corresponding claims, the inventive point is that the corresponding technical problem can be solved with features fewer than all the features of a single embodiment being disclosed. Therefore, the claims following the detailed description are hereby expressly incorporated into the detailed description, wherein each claim itself serves as an independent embodiment of the present disclosure.

It may be understood by those skilled in the art that, except for mutually exclusive features, all features disclosed in this specification (including the claims, abstract and drawings) and all processes or units of any method or device disclosed in this specification can be combined in any way. Unless otherwise expressly stated, each feature disclosed in this specification (including the claims, abstract and drawings) may be replaced by an alternative feature that provides the same, equivalent or similar purpose.

In addition, it may be understood by those skilled in the art that, although some embodiments described herein include certain features included in other embodiments instead of other features, the combination of features of different embodiments is meant to be within the scope of the present disclosure and form different embodiments. For example, in the claims, any one of the claimed embodiments can be used in any combination.

The various component embodiments of the present disclosure may be implemented in hardware, or in software modules running on one or more processors, or in a combination thereof. It should be understood by those skilled in the art that a microprocessor or a digital signal processor (DSP) may be used in practice to implement some or all functions of some modules of the test process analysis apparatus according to the embodiments of the present disclosure. The present disclosure may also be implemented as a device program (e.g., a computer program and a computer program product) for executing a part of or the entire method described herein. Such a program implementing the present disclosure may be stored on a computer-readable medium, or may be in the form of one or more signals. Such a signal may be downloaded from an Internet website, or provided on a carrier signal, or provided in any other form.

It should be noted that the above embodiments illustrate rather than limit the present disclosure, and alternative embodiments may be designed by those skilled in the art without departing from the scope of the claims. In the claims, any reference symbol between parentheses shall not be construed as a limitation of the claims. The word "comprising" does not exclude the presence of elements or steps not listed in the claims. The word "a" or "an" preceding an element does not exclude the presence of a plurality of such elements. The present disclosure may be implemented by means of hardware comprising several different elements and by means of a suitably programmed computer. In a unit claim enumerating several devices, several of these devices may be embodied by a same hardware item. The use of the words "first", "second", and "third", etc. does not indicate any order. These words may be interpreted as names.

The descriptions hereinabove are merely specific embodiments of the present disclosure or explanations of the specific embodiments. The scope of the present disclosure is not limited thereto. Any variations or substitutions made by those skilled in the art within the technical scope disclosed in the present disclosure are deemed to fall within the scope of the present disclosure. The scope of the present disclosure is based on the scope of the claims.

## Claims

1. A test process analysis method, comprising:
determining an analysis order of nodes in a test process based on a connection relationship between the nodes in the test process;
acquiring service information of the nodes in the test process, wherein the service information of the nodes comprises preset node information and node information set when building the test process; and
configuring the service information of the nodes to the corresponding nodes in accordance with the determined analysis order, to analyze the test process into a plurality of ordered operations.

2. The method according to claim 1, wherein the configuring the service information of the nodes to the corresponding nodes in accordance with the determined analysis order to analyze the test process into the plurality of ordered operations comprises:
determining a dependency relationship between a current node and its preceding adjacent node in accordance with the determined analysis order; and
configuring the current node using service information of the preceding adjacent node and service information of the current node in accordance with the dependency relationship, to determine one or more ordered operations corresponding to the current node.

3. The method according to claim 1, wherein
the acquiring the service information of the nodes in the test process comprises:
acquiring, for adjacently connected device nodes in the test process, pre-operation and/or post-operation information of device nodes; and
wherein the configuring the service information of the nodes to the corresponding nodes in accordance with the determined analysis order to analyze the test process into the plurality of ordered operations comprises:
determining an execution order of pre-operations and/or post-operations of the device nodes and self-operations of the device nodes based on an adjacent connection relationship between different device nodes in the test process and the pre-operation and/or post-operation information of the device nodes.

4. The method according to claim 3, wherein the determining the execution order of pre-operations and/or post-operations of the device nodes and self-operations of the device nodes based on the adjacent connection relationship between different device nodes in the test process and the pre-operation and/or post-operation information of the device nodes comprises:
merging, when there is at least one repeated operation in post-operations of a previous device node and pre-operations of a subsequent device node among the adjacently connected device nodes, the at least one repeated operations in the post-operations of the previous device node and the pre-operations of the subsequent device node, such that each merged operation appears as a single operation in the execution order.

5. The method according to claim 4, wherein the merging the at least one repeated operations in the post-operations of the previous device node and the pre-operations of the subsequent device node comprises:
determining, when the post-operations of the previous device node comprises a first transporting operation of transporting from the previous device to the subsequent device and the pre-operations of the subsequent device node comprises a second transporting operation of transporting from the previous device to the subsequent device, that the first transporting operation and the second transporting operation are repeated, and merging the first transporting operation and the second transporting operation into the same operation.

6. The method according to any one of claim 1 to 5, further comprising:
providing a user interface which is configured to display an information template of the device, wherein the information template is provided with an operable control which is configured to acquire the service information of the device nodes in the test process.

7. The method according to any one of claim 1 to 5, wherein the nodes comprises process control nodes, and
wherein the determining the analysis order of nodes in the test process based on the connection relationship between the nodes in the test process comprises:
determining, starting from the starting node of the test process, a next node sequentially based on the connection relationship between nodes in the test process, until all nodes in the test process are traversed; and
wherein for each of the process control nodes, nodes between a starting position and an ending position of the process control node are determined as one analysis unit for analyzing.

8. The method according to any one of claim 1 to 5, wherein the nodes comprises a device node and a consumable node; and wherein
service information of the device node comprises one or more of: device attribute information, operation instruction information, execution duration information, and pre-operation and/or post-operation information of a device corresponding to the device node; and
service information of the consumable node comprises one or more of: consumable information of a consumable corresponding to the consumable node, ending position information at the end of the test process, and error position information at the event of an error in the test process.

9. A test process analysis apparatus, comprising:
a node analysis module, configured to determine an analysis order of nodes in a test process based on a connection relationship between the nodes in the test process;
an acquisition module, configured to acquire service information of the nodes in the test process, wherein the service information of the nodes comprises preset node information and node information set when building the test process; and
an operation analysis module, configured to configure the service information of the nodes to the corresponding nodes in accordance with the determined analysis order to analyze the test process into a plurality of ordered operations.

10. An electronic device, comprising a processor and a memory, wherein the memory having computer program instructions stored therein which, when executed by the processor, are configured to perform the test process analysis method of any one of claims 1 to 8.

11. A storage medium, storing program instructions, wherein the program instructions, when executed, cause the test process analysis method of any one of claims 1 to 8 to be performed.
